(19) Europäisches Patentamt European Patent Office Office européen des brevets

(11) **EP 1 537 312 B1**

(12) **EUROPÄISCHE PATENTSCHRIFT**

(45) Veröffentlichungstag und Bekanntmachung des Hinweises auf die Patenterteilung:
**31.01.2007 Patentblatt 2007/05**

(21) Anmeldenummer: **03714632.1**

(22) Anmeldetag: **03.02.2003**

(51) Int Cl.:
*F02D 11/10* *(2006.01)*

(86) Internationale Anmeldenummer:
**PCT/DE2003/000290**

(87) Internationale Veröffentlichungsnummer:
**WO 2004/016923 (26.02.2004 Gazette 2004/09)**

(54) **VERFAHREN UND VORRICHTUNG ZUM STEUERN DER ANTRIEBSEINHEIT EINES FAHRZEUGS**

METHOD AND DEVICE FOR CONTROLLING THE DRIVE UNIT OF A VEHICLE

PROCEDE ET DISPOSITIF POUR COMMANDER UNE UNITE D'ENTRAINEMENT DANS UN VEHICULE

(84) Benannte Vertragsstaaten:
**DE FR IT**

(30) Priorität: **24.07.2002 DE 10233576**

(43) Veröffentlichungstag der Anmeldung:
**08.06.2005 Patentblatt 2005/23**

(73) Patentinhaber: **ROBERT BOSCH GMBH**
**70442 Stuttgart (DE)**

(72) Erfinder:
• **GLORA, Michael**
**71706 Markgroeningen (DE)**
• **MUEHLBAUER, Christian**
**71679 Asperg (DE)**
• **KUSTOSCH, Mario**
**71665 Vaihingen/Enz (DE)**

(56) Entgegenhaltungen:
| | |
|---|---|
| WO-A-01/47735 | US-A- 5 012 418 |
| US-A- 5 465 208 | US-A- 5 669 847 |
| US-A1- 2001 008 989 | |

EP 1 537 312 B1

## Beschreibung

Stand der Technik

Die Erfindung geht von einem Verfahren und von einer Vorrichtung zum Steuern der Antriebseinheit eines Fahrzeugs nach der Gattung der unabhängigen Ansprüche aus.

WO 01/47735 offenbart ein Verfahren zum steuern der Antriebseinheit eines Fahrzeugs gemäß dem Oberbegriff des Anspruchs 1, und eine entsprechende Vorrichtung gemäß dem Oberbegriff des Anspruchs 10.

Die Beschleunigung etabliert sich als eine zentrale Größe zur Steuerung der Fahrzeuglängsbewegung in vernetzten Antriebssystemen. Anwendungen wie Fahrgeschwindigkeitsregelung oder Fahrdynamikregelung verwenden bereits eine Beschleunigungsvorgabe. Die Beschleunigungsvorgabe seitens des Fahrers über ein herkömmliches Fahrpedal ist insofern problematisch, da sowohl die Ruhestellung des Fahrpedals, als auch der obere Anschlag des Fahrpedals nicht eindeutig einer Beschleunigungsvorgabe zugeordnet werden können, ohne dass dabei ein Leerweg, d.h. ein Pedalweg ohne Wirkung auf den Motor aus der Pedalruhestellung heraus oder ein Totweg, d.h. ein Pedalweg ohne weitere Wirkung auf den Vortrieb im oberen Pedalbereich entsteht. Leerweg oder Totweg werden vom Fahrer als unangenehm empfunden. Das folgende Beispiel soll diesen Sachverhalt verdeutlichen:

Die Beschleunigungsvorgabe über das Fahrpedal wird von der Stellung 0 beginnend mit dem Wert $0 m/s^2$ bis zum oberen Pedalanschlag mit dem Wert $4 m/s^2$ linear interpoliert. Für die Beschreibung des Leerweges wird nun angenommen, dass das Fahrzeug durch die Gravitationskraft bergab beschleunigt wird, zum Beispiel mit $0,8 m/s^2$. Das bedeutet, dass der Fahrer das Fahrpedal bis zu dem Winkel bewegen muss, dem $0,8 m/s^2$ zugeordnet sind, bevor eine Fahrzeugreaktion auftritt. Bezüglich des Totweges sei angenommen, dass das Fahrzeug durch die Gravitationskraft bergauf gebremst wird, zum Beispiel ebenfalls mit $0,8 m/s^2$. Dadurch kann das Fahrzeug bei maximaler Motorleistung keine Beschleunigung von $4 m/s^2$ erreichen, sondern nur noch einen Wert von $3,2 m/s^2$. Das bedeutet, dass der Fahrer ab dem Pedalwinkel, dem $3,2 m/s^2$ zugeordnet sind, keine weitere Fahrzeugreaktion mehr verspürt.

Vorteile der Erfindung

Das erfindungsgemäße Verfahren und die erfindungsgemäße Vorrichtung zum Steuern der Antriebseinheit eines Fahrzeugs mit den Merkmalen der unabhängigen Anspruche 1 bzw. 10 haben demgegenüber den Vorteil, dass in Abhängigkeit eines momentanen Fahrwiderstandes ein Minimalwert und/oder ein Maximalwert für die Beschleunigung des Fahrzeugs ermittelt wird und dass der Minimalwert und/oder der Maximalwert jeweils einer Grenze eines Stellbereiches für die Stellung des Bedienelementes zugeordnet werden. Auf diese Weise kann der Stellbereich für die Stellung des Bedienelementes in Abhängigkeit des momentanen Fahrwiderstandes derart aktualisiert werden, dass weder Leerweg noch Totweg bei der Vorgabe eines Beschleunigungswunsches über das Fahrpedal auftreten. Somit wird der Fahrkomfort erhöht.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn ein unbekannter Anteil des Fahrwiderstandes mit Hilfe einer fahrdynamischen Gleichung in Abhängigkeit einer momentanen Antriebskraft des Fahrzeugs, einem bekannten Anteil des Fahrwiderstandes und einer momentanen Fahrzeugbeschleunigung abgeleitet wird. Auf diese Weise lässt sich der momentane Fahrwiderstand sehr präzise sowohl unter Berücksichtigung seines bekannten Anteils, als auch unter Berücksichtigung seines unbekannten Anteils ermitteln. Dies ermöglicht auch eine präzise Ermittlung des Minimalwertes und/oder des Maximalwertes für die Beschleunigung des Fahrzeuges. Leerweg und Totweg können somit noch besser vermieden werden.

Vorteilhaft ist auch, wenn der unbekannte Anteil des Fahrwiderstandes, insbesondere mittels eines Tiefpasses, gefiltert wird. Auf diese Weise können Schwingungen, die sich bei der Ermittlung des unbekannten Anteils des Fahrwiderstandes ergeben, weitgehend eliminiert werden.

Besonders vorteilhaft ist es, wenn der Minimalwert der Beschleunigung aus einer durch ein momentanes Schleppmoment bestimmten Antriebskraft des Fahrzeugs abzüglich des momentanen Fahrwiderstandes ermittelt wird. Auf diese Weise entspricht der Minimalwert der Beschleunigung im Wesentlichen der bei losgelassenem Fahrpedal tatsächlich auftretenden Fahrzeugbeschleunigung. Somit lässt sich der beschriebene Leerweg bei der Vorgabe des Beschleunigungswunsches über das Fahrpedal weitestgehend vermeiden.

Ein weiterer Vorteil besteht darin, dass der Maximalwert der Beschleunigung aus einer durch den momentanen Betriebspunkt des Fahrzeugs bestimmten maximalen Antriebskraft abzüglich des momentanen Fahrwiderstandes ermittelt wird. Auf diese Weise entspricht der Maximalwert der Beschleunigung im Wesentlichen der im momentanen Betriebspunkt des Fahrzeugs maximal erreichbaren Fahrzeugbeschleunigung. Somit kann der Totweg bei der Vorgabe des Beschleunigungswunsches über das Fahrpedal im Bereich des oberen Pedalanschlages weitestgehend vermieden werden.

Besonders vorteilhaft ist es, wenn im Falle eines den Wert 0 überschreitenden Minimalwertes der Beschleunigung bei der dem Minimalwert zugeordneten Stellung des Bedienelementes eine Fahrzeugbremse aktiviert wird. Auf diese Weise kann bei losgelassenem Fahrpedal und entsprechend starkem Gefälle, bei dem das Schleppmoment nicht mehr ausreicht, um die momentane Fahrzeuggeschwindigkeit zu halten, ein Bremswunsch des Fahrers erkannt und umgesetzt werden, ohne dass eine Betätigung des Bremspedals erforderlich ist. Somit wird der Fahrkomfort weiter erhöht.

Besonders vorteilhaft ist dabei, wenn die Bremskraft so gewählt wird, dass der Minimalwert der Beschleunigung auf etwa 0 reduziert wird. Auf diese Weise wird das losgelassene Fahrpedal dahingehend interpretiert, dass als kleinstmögliche Beschleunigung der Wert 0 zugelassen werden soll. Somit wird die Fahrsicherheit besonders bei Gefällstrecken erhöht.

Ein weiterer Vorteil besteht darin, dass die Zuordnung des Minimalwertes und/oder des Maximalwertes zu der jeweiligen Grenze des Stellbereiches in Abhängigkeit einer momentanen Fahrzeuggeschwindigkeit durchgeführt wird. Auf diese Weise kann beispielsweise bei Gefällstrecken die zusätzliche Aktivierung der Fahrzeugbremse bei losgelassenem Fahrpedal erst bei Überschreiten einer vorgegebenen Fahrzeuggeschwindigkeit veranlasst werden, um den Fahrer von einer ständigen Betätigung des Fahrpedals zur Verringerung einer Bremswirkung zu befreien. Somit wird wiederum der Fahrkomfort erhöht.

Zeichnung

Ein Ausführungsbeispiel der Erfindung ist in der Zeichnung dargestellt und in der nachfolgenden Beschreibung näher erläutert.

Es zeigen

Figur 1 ein Blockschaltbild mit einer erfindungsgemäßen Vorrichtung,
Figur 2 ein Funktionsdiagramm zur Beschreibung des erfindungsgemäßen Verfahrens und des Aufbaus der erfindungsgemäßen Vorrichtung,
Figur 3 ein Funktionsdiagramm zur Ermittlung eines Minimalwertes für die Antriebskraft,
Figur 4 ein Funktionsdiagramm zur Ermittlung einer maximalen Antriebskraft,
Figur 5 einen Verlauf einer Sollbeschleunigung über einem Pedalweg eines Fahrpedals in einer ersten Fahrsituation und
Figur 6 einen Verlauf der Sollbeschleunigung über dem Pedalweg in einer zweiten Fahrsituation.

Beschreibung des Ausführungsbeispiels

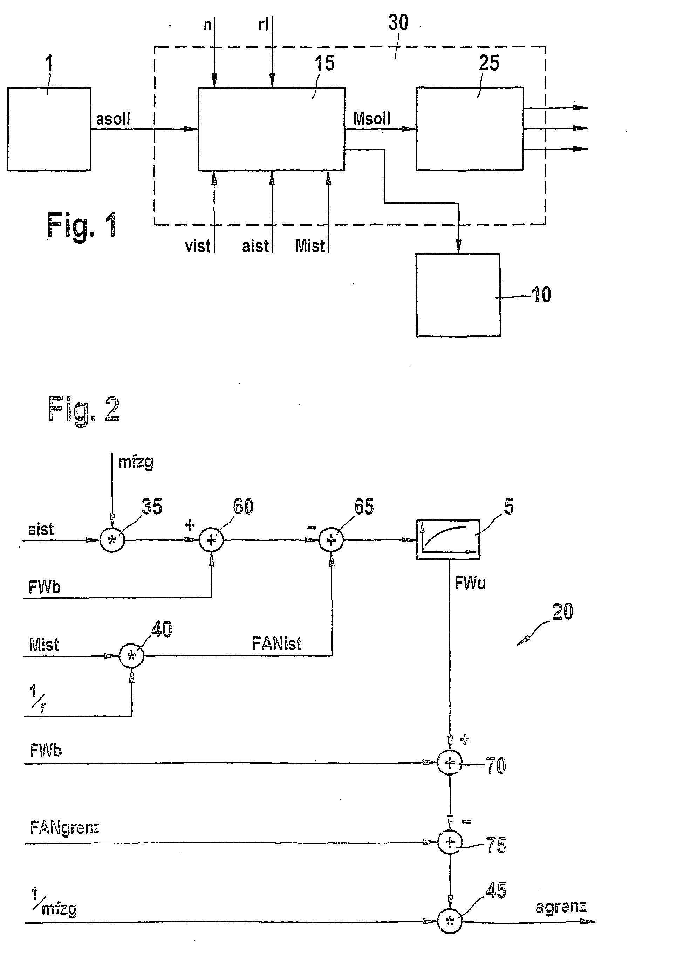

In Figur 1 kennzeichnet 30 eine Motorsteuerung einer Antriebseinheit eines Fahrzeugs. Die Erfindung lässt sich für beliebige Arten von Antriebseinheiten realisieren. Die Antriebseinheit kann also beispielsweise einen Elektroantrieb oder eine Brennkraftmaschine umfassen. Bei der Brennkraftmaschine wiederum kann es sich beispielsweise um einen Otto-Motor oder einen Dieselmotor handeln. Im Folgenden soll beispielhaft angenommen werden, dass die Antriebseinheit einen Benzinmotor umfasst. In Figur 1 ist nun eine Motorsteuerung der Antriebseinheit mit dem Bezugszeichen 30 gekennzeichnet. Die Motorsteuerung 30 umfasst Mittel 15 zur Bildung eines Sollwertes für eine Ausgangsgröße der Antriebseinheit. Bei der Ausgangsgröße der Antriebseinheit kann es sich beispielsweise um ein Motorausgangsmoment, ein Radmoment, eine Motorleistung oder dergleichen handeln. Im Folgenden soll beispielhaft angenommen werden, dass es sich bei der Ausgangsgröße um ein Radmoment handelt. Den Mitteln 15 ist aus in Figur 1 nicht dargestellten und dem Fachmann bekannten Erfassungsmitteln eine momentane Fahrzeuggeschwindigkeit vist, die im Folgenden auch als Istgeschwindigkeit bezeichnet wird, eine momentane Fahrzeugbeschleunigung aist, die im Folgenden auch als Istbeschleunigung bezeichnet wird, ein momentanes Radmoment mist, das im Folgenden auch als Istmoment bezeichnet wird, eine momentane Motordrehzahl n und eine momentane Füllung rl zugeführt. Dabei kann die Istbeschleunigung aist auch aus der zugeführten Istgeschwindigkeit vist durch Ableitung ermittelt werden. Ferner sind die Mittel 15 mit einem Bedienelement 1 verbunden, das beispielsweise als Fahrpedal ausgebildet ist und über dessen Stellung der Fahrer des Fahrzeugs einen Beschleunigungswunsch im Sinne einer Sollbeschleunigung asoll vorgeben kann. Im Folgenden soll beispielhaft angenommen werden, dass es sich bei dem Bedienelement um ein Fahrpedal handelt. Gegenstand der Erfindung ist die Umwandlung der Stellung des Fahrpedals 1 in die Sollbeschleunigung asoll. Aus der vorgegebenen Sollbeschleunigung asoll ermitteln die Mittel 15 abhängig vom momentanen Betriebspunkt des Motors und der momentanen Fahrsituation, insbesondere der Istbeschleunigung aist, ein Sollmoment Msoll als Sollwert für das Radmoment. Dieses wird an Mittel 25 der Motorsteuerung 30 zur Bildung mindestens einer Stellgröße zur Umsetzung des Sollmomentes Msoll übertragen. Dabei können im Falle des Otto-Motors beispielsweise folgende Stellgrößen zur Umsetzung des Sollmomentes Msoll vorgesehen sein: Zündzeitpunkt, Einspritzzeitpunkt, Einspritzmenge, Luftzufuhr, Kraftstoff-LuftGemisch. Ferner können die Mittel 15 eine Fahrzeugbremse 10 ansteuern.

Erfindungsgemäß wird nun ein Minimalwert und/oder ein Maximalwert für die Beschleunigung des Fahrzeugs ermittelt, die vom momentanen Fahrwiderstand abhängen. Im Folgenden soll beispielhaft angenommen werden, dass sowohl der Minimalwert, als auch der Maximalwert für die Beschleunigung ermittelt werden. Die Berechnung des Minimalwertes und des Maximalwertes für die Beschleunigung erfolgt mit Hilfe der fahrdynamischen Gleichung wie folgt:

$$asoll * mfzg = FANsoll - FWb - FWu \qquad (1)$$

Dabei ist
mfzg die Fahrzeugmasse
FANsoll die Sollantriebskraft des Fahrzeugs,
FWb der bekannte momentane Fahrwiderstand und
FWu der unbekannte momentane Fahrwiderstand.
Der bekannte Fahrwiderstand FWb ergibt sich beispielsweise durch Summierung der Rollreibung FRO, des Luftwiderstandes FL und des Fahrwiderstandes durch Steigung FST wie folgt:

$$FWb = FRO + FL + FST \qquad (2)$$

Zum Zwecke einer Annäherung an den bekannten Fahrwiderstand FWb mit möglichst geringem Rechenaufwand kann auch nur eine der genannten Fahrwiderstandskräfte FRO, FL, FST oder eine Summe aus weniger als allen genannten Fabrwiderstandskräften FRO, FL, FST gebildet werden. Im Folgenden soll jedoch beispielhaft angenommen werden, dass der bekannte Fahrwiderstand FWb gemäß Gleichung (2) gebildet wird. Dabei kann die Rollreibung FRO als konstant angenommen werden. Der Luftwiderstand FL kann als Funktion der Fahrzeuggeschwindigkeit modelliert werden. Der Fahrwiderstand durch Fahrbahnsteigung FST kann beispielsweise mittels eines Beschleunigungssensors gemessen werden.
Die Fahrzeugmasse mfzg in Gleichung (1) kann beispielsweise ebenfalls als aus den Fahrzeugdaten bekannt vorausgesetzt werden.
Der unbekannte Fahrwiderstand FWu kann in Anlehnung an Gleichung (1) aus folgendem Zusammenhang adaptiert werden:

$$aist * mfzg = FANist - FWb - FWu \qquad (3)$$

Dabei ist die momentane Antriebskraft FANist, die im Folgenden auch als Istwert der Antriebskraft bezeichnet wird, aus dem Radistmoment Mist und dem Radius r der Antriebsräder bekannt. Die Istbeschleunigung aist ist beispielsweise durch Ableitung der Istgeschwindigkeit vist gegeben. Aus Gleichung (3) ergibt sich somit:

$$FWu = FANist - FWb - aist*mfzg \qquad (4)$$

Aus Gründen der Dynamik kann die rechte Seite der Gleichung (4) mit einem Filter, beispielsweise einem Tiefpass erster Ordnung T1, gefiltert werden, insbesondere, damit sich Ungenauigkeiten aus der Ableitung der Istgeschwindigkeit vist nicht auf den momentanen unbekannten Fahrwiderstand FWu auswirken können. Somit ergibt sich aus Gleichung (4) nach Tiefpassfilterung für den momentanen unbekannten Fahrwiderstand FWu:

$$FWu = T1\{FANist - FWb - aist * mfzg\} \qquad (5)$$

Gleichung (5) kann nun in Gleichung (1) eingesetzt werden, so dass sich ergibt:

$$asoll * mfzg = FANsoll - FWb - T1\{FANist - FWb - aist * mfzg\} \quad (6)$$

Aus Gleichung (6) kann jetzt endlich der Minimalwert für die Beschleunigung berechnet werden, indem der Sollwert der Antriebskraft FANsoll durch das Produkt aus dem momentanen Schleppmoment Mschlepp und dem invertierten Radradius r ersetzt wird, so dass sich für den Minimalwert agrenzmin der Beschleunigung ergibt:

$$agrenzmin = (Mschlepp/r - FWb - T1\ \{FANist - FWb - aist * mfzg\})/mfzg \quad (7)$$

Das momentane Schleppmoment Mschlepp lässt sich dabei in den Mitteln 15 aus der aktuellen Motordrehzahl n und der Füllung rl anhand eines an einem Prüfstand aufgenommenen Kennfeldes in einer dem Fachmann bekannten Weise ermitteln. Ein Maximalwert agrenzmax für die Beschleunigung des Fahrzeugs ergibt sich, indem in Gleichung (6) der Sollwert für die Antriebskraft FANsoll durch das Produkt aus einem momentanen maximalen Radmoment Mengmax und dem invertierten Radradius r ersetzt wird, so dass sich für den Maximalwert agrenzmax der Beschleunigung Folgendes ergibt:

$$agrenzmax = (Mengmax/r - FWb - T1\ \{FANist - FWb - aist * mfzg\})/mfzg \quad (8)$$

Das momentane maximale Radmoment Mengmax kann ebenfalls in einer dem Fachmann bekannten Weise aus der maximalen momentanen Füllung rl und der momentanen Motordrehzahl n aus einem am Prüfstand ermittelten Kennfeld ermittelt werden.

Wenn es sich bei der Brennkraftmaschine um einen Dieselmotor handelt, so erfolgt die Ermittlung des momentanen Motorschleppmomentes Mschlepp und des momentanen maximalen Radmomentes Mengmax in entsprechender Weise aus jeweils einem Kennfeld, dessen Eingangsgrößen die momentane Motordrehzahl n und die Einspritzmenge ist. Entsprechend muss beim Dieselmotor für die Berechnung von FANist den Mitteln 15 ein Messwert für die momentane Einspritzmenge zugeführt werden.

In Figur 2 ist ein Funktionsdiagramm zur Ermittlung des Minimalwertes agrenzmin und des Maximalwertes agrenzmax für die Beschleunigung des Fahrzeugs dargestellt, wobei dieses Funktionsdiagramm den Aufbau von Mitteln 20 zur Ermittlung des Minimalwertes agrenzmin und des Maximalwertes agrenzmax für die Beschleunigung beschreibt. Die Mittel 20 sind dabei Teil der Mittel 15 zur Bildung des Sollmomentes Msoll. Der Aufbau der Mittel 20 ist wie folgt:

Einem ersten Multiplikationsglied 35 ist die Istbeschleunigung aist und die Fahrzeugmasse mfzg zugeführt. Das Produkt wird in einem ersten Summationsglied 60 zu dem gemäß Gleichung (2) ermittelten momentanen bekannten Fahrwiderstand FWb addiert. Die Summe wird nach Multiplikation mit -1 in einem zweiten Summationsglied 65 zu dem Istwert FANist der Antriebskraft addiert. Die sich dabei ergebende Summe wird dem beschriebenen Tiefpass zugeführt, der in Figur 2 mit dem Bezugszeichen 5 gekennzeichnet ist und nach Filterung einem dritten Summationsglied 70 zugeführt und zum momentanen bekannten Fahrwiderstand FWb addiert. Die sich dabei ergebende Summe wird nach Multiplikation mit -1 in einem vierten Summationsglied 75 zu einem Grenzwert FANgrenz der Antriebskraft addiert. Die sich dabei ergebende Summe wird in einem dritten Multiplikationsglied 45 mit dem Kehrwert der Fahrzeugmasse mfzg multipliziert. Das sich dabei ergebende Produkt ist ein Grenzwert agrenz für die Beschleunigung des Fahrzeugs. Der Istwert FANist der Antriebskraft, der der momentanen Antriebskraft des Fahrzeugs entspricht, ergibt sich durch Multiplikation des Istmomentes Mist, das dem momentanen Radmoment entspricht, mit dem invertierten Radradius r in einem zweiten Multiplikationsglied 40.

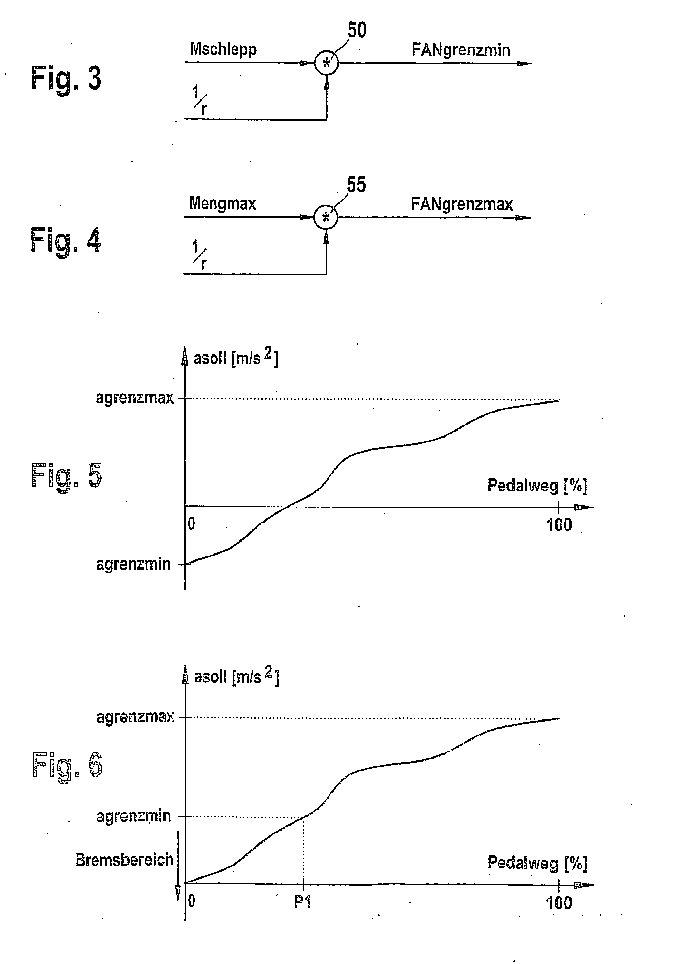

Die Vorrichtung 20 kann zur Ermittlung des Grenzwertes FANgrenz der Antriebskraft umschalten zwischen einem ersten Funktionsblock nach Figur 3 und einem zweiten Funktionsblock nach Figur 4, je nach dem, ob der ermittelte Grenzwert agrenz für die Beschleunigung dem Minimalwert agrenzmin oder dem Maximalwert agrenzmax für die Beschleunigung entsprechen soll. Zur Ermittlung des Minimalwertes agrenzmin für die Beschleunigung zeigt Figur 3 ein Funktionsdiagramm zur Ermittlung des zugehörigen minimalen Grenzwertes FANgrenzmin der Antriebskraft als Produkt des momentanen Schleppmomentes Mschlepp und des invertierten Radradius r, berechnet mittels eines vierten Multiplikationsgliedes 50.

Der Maximalwert agrenzmax für die Beschleunigung ergibt sich gemäß dem Funktionsdiagramm nach Figur 4, wenn der Grenzwert FANgrenz der Antriebskraft der maximale Grenzwert FANgrenzmax der Antriebskraft ist, der sich mittels des fünften Multiplikationsgliedes 55 als Produkt aus dem momentanen maximalen Radmoment Mengmax und dem invertierten Radradius r ergibt.

Die Funktionsdiagramme in Figur 2, 3 und 4 können softwaremäßig und/oder hardwaremäßig realisiert sein.

Die für einen momentanen Betriebspunkt des Fahrzeugs und einen durch den momentanen bekannten und unbekannten Fahrwiderstand FWb, FWu in der beschriebenen Weise ermittelte Minimalwert agrenzmin und Maximalwert agrenzmax für die Beschleunigung des Fahrzeugs werden anschließend den Grenzen eines Stellbereiches für die Stellung des Fahrpedals 1 zugeordnet. Dabei wird der Minimalwert agrenzmin dem losgelassenen Fahrpedal und der Maximalwert agrenzmax dem voll durchgetretenen oder mit anderen Worten dem oberen Anschlag des Fahrpedals 1 zugeordnet. Dies ist in Figur 5 dargestellt, indem der Verlauf der Sollbeschleunigung asoll in m/s$^2$ über dem Pedalweg des Fahrpedals 1 in Prozent aufgetragen ist. Zwischen dem Minimalwert agrenzmin und dem Maximalwert agrenzmax kann die Sollbeschleunigung asoll über dem Pedalweg, wie beispielhaft in Figur 5 dargestellt, durch geeignete Kalibrierung vorgegeben werden. Der Verlauf der Sollbeschleunigung asoll ist dabei gemäß Figur 5 beispielhaft nichtlinear und streng monoton steigend, er könnte aber auch linear interpoliert vom Minimalwert agrenzmin bei losgelassenem Fahrpedal, also bei Pedalweg = 0% bis zum Maximalwert agrenzmax bei voll durchgetretenem Fahrpedal, also Pedalweg = 100%, verlaufen. Die Kennlinie gemäß Figur 5 wird dabei ebenfalls in den Mitteln 15 gebildet. Durch die Zuordnung des Minimalwertes agrenzmin zum Pedalweg 0% und des Maximalwertes agrenzmax zum Pedalwert 100% und dem zwischen diesen beiden Werten streng monoton steigenden Verlauf der Sollbeschleunigung asoll wird ein Leerweg und ein Totweg bei der Interpretation des Beschleunigungswunsches über die Stellung des Fahrpedals vermieden. Im Beispiel nach Figur 5 ist der Minimalwert agrenzmin negativ. Bei entsprechend starkem Gefälle kann es jedoch passieren, dass der momentane Fahrwiderstand betragsmäßig so groß wird, dass der Minimalwert agrenzmin den Wert 0 überschreitet, d.h. dass das Schleppmoment Mschlepp nicht mehr ausreicht, um die momentane Fahrgeschwindigkeit vist zu halten. In diesem Fall kann es vorgesehen sein, dass die Mittel 15 die Fahrzeugbremse 10 aktivieren. Dabei können die Mittel 15 die Fahrzeugbremse 10 derart ansteuern, dass sich eine Bremswirkung ergibt, die bei losgelassenem Fahrpedal, also Pedalweg 0%, als Sollwert asoll für die Beschleunigung den Wert 0 vorgibt, d.h. dass sich bei losgelassenem Fahrpedal keine Beschleunigung ergibt. Die Bremswirkung wird dann mit zunehmendem Pedalweg reduziert. Die Bremswirkung geht dabei mit Erreichen des Minimalwertes agrenzmin für die Sollbeschleunigung asoll auf 0 zurück, so dass bei der zugeordneten Pedalstellung Pl gemäß Figur 6 die Mittel 15 die Fahrzeugbremse 10 wieder deaktivieren können. Figur 6 zeigt dabei ebenfalls den Verlauf der Sollbeschleunigung asoll in m/s$^2$ über dem Pedalwert in Prozent mit positivem Minimalwert agrenzmin, wobei für Sollbeschleunigungen asoll unterhalb des Minimalwertes agrenzmin die Mittel 15 die Fahrzeugbremse 10 aktivieren, also ein Bremsbereich vorliegt. Auf diese Weise steigt der Verlauf der Sollbeschleunigung asoll gemäß dem Beispiel nach Figur 6 bei losgelassenem Fahrpedal, also Pedalweg 0% von 0 bis zum Maximalwert agrenzmax bei voll durchgetretenem Fahrpedal, also Pedalweg 100% streng monoton an. Die Reduzierung der Bremswirkung bei aktivierter Fahrzeugbremse 10 und zunehmendem Pedalwert muss dabei entsprechend dem gerade aktuellen Verlauf der Sollbeschleunigung asoll im genannten Bremsbereich, wie hier beispielhaft in Figur 6 dargestellt ist, erfolgen, damit bei entsprechendem Pedalweg die zugehörige Sollbeschleunigung asoll auch realisiert werden kann.

Weiterhin kann optional vorgesehen sein, dass die Kennlinie für die Sollbeschleunigung asoll über dem Pedalweg abhängig von der Istgeschwindigkeit vist ermittelt wird, so dass sich auch eine Kennlinienschar in Abhängigkeit der Istgeschwindigkeit vist ergeben kann. Beispielsweise kann es vorgesehen sein, dass die zu Figur 6 beschriebene Bremswirkung durch Aktivierung der Fahrzeugbremse 10 erst bei Überschreiten einer vorgegebenen Geschwindigkeitsschwelle durch die Istgeschwindigkeit vist erfolgt und damit die Begrenzung der Sollbeschleunigung asoll bis auf 0 für losgelassenes Fahrpedal und einem positiven Minimalwert agrenzmin nur für Istgeschwindigkeiten vist oberhalb der genannten Geschwindigkeitsschwelle wirksam wird. Damit wird der Fahrer des Fahrzeugs bei Gefällstrecken vom ständigen Betätigen des Fahrpedals entlastet, um eine Bremswirkung zu verhindern.

Aufgrund der beschriebenen Interpretation des Pedalweges bzw. des Fahrpedalwinkels als Sollbeschleunigung asoll ohne Leerweg und ohne Totweg wird eine komfortablere Fahrweise ermöglicht, da Fahrwiderstände nicht durch Betätigung des Fahrpedals ausgeglichen werden müssen, ohne zu einer Beschleunigung zu führen.

Im Falle der Geschwindigkeitsabhängigkeit bei der Bestimmung der Kennlinien für die Sollbeschleunigung asoll über dem Pedalweg können sich auch unterschiedliche Minimalwerte agrenzmin und/oder Maximalwerte agrenzmax für die Beschleunigung ergeben.

Der Minimalwert agrenzmin und der Maximalwert agrenzmax werden während des Fahrbetriebes immer wieder an den jeweils aktuellen Betriebspunkt und die jeweils aktuelle Fahrsituation bzw. den jeweils aktuellen momentanen Fahrwiderstand in der beschriebenen Weise angepasst, damit sicher gestellt wird, dass im gesamten Fahrbetrieb der Leerweg und der Totweg bei der Betätigung des Fahrpedals zur Vorgabe der Sollbeschleunigung asoll vermieden wird.

**Patentansprüche**

1. Verfahren zum Steuern der Antriebseinheit eines Fahrzeugs, wobei aus einer Stellung eines Bedienelementes (1), insbesondere eines Fahrpedals, ein Beschleunigungswunsch abgeleitet und in Abhängigkeit des Beschleunigungswunsches ein Sollwert für eine Ausgangsgröße der Antriebseinheit gebildet wird, **dadurch gekennzeichnet, dass** in Abhängigkeit eines momentanen Fahrwiderstandes ein Minimalwert und/oder ein Maximalwert für die Beschleunigung des Fahrzeugs ermittelt wird und dass der Minimalwert und/oder der Maximalwert jeweils einer Grenze eines Stellbereiches für die Stellung des Bedienelementes (1) zugeordnet werden.

2. Verfahren nach Anspruch 1, **dadurch gekennzeichnet, dass** der Fahrwiderstand in Abhängigkeit einer Rollreibung, eines Luftwiderstandes, eines Fahrwiderstandes durch Steigung und/oder einer Trägheitskraft ermittelt wird.

3. Verfahren nach einem der vorherigen Ansprüche, **dadurch gekennzeichnet, dass** ein unbekannter Anteil des Fahrwiderstandes mit Hilfe einer fahrdynamischen Gleichung in Abhängigkeit einer momentanen Antriebskraft des Fahrzeugs, einem bekannten Anteil des Fahrwiderstandes und einer momentanen Fahrzeugbeschleunigung abgeleitet wird.

4. Verfahren nach Anspruch 3, **dadurch gekennzeichnet, dass** der unbekannte Anteil des Fahrwiderstandes, insbesondere mittels eines Tiefpasses (5), gefiltert wird.

5. Verfahren nach einem der vorherigen Ansprüche, **dadurch gekennzeichnet, dass** der Minimalwert der Beschleunigung aus einer durch ein momentanes Schleppmoment bestimmten Antriebskraft des Fahrzeugs abzüglich des momentanen Fahrwiderstandes ermittelt wird.

6. Verfahren nach einem der vorherigen Ansprüche, **dadurch gekennzeichnet, dass** der Maximalwert der Beschleunigung aus einer durch den momentanen Betriebspunkt des Fahrzeugs bestimmten maximalen Antriebskraft abzüglich des momentanen Fahrwiderstandes ermittelt wird.

7. Verfahren nach einem der vorherigen Ansprüche, **dadurch gekennzeichnet, dass** im Falle eines den Wert Null überschreitenden Minimalwertes der Beschleunigung bei der dem Minimalwert zugeordneten Stellung des Bedienelementes (1) eine Fahrzeugbremse (10) aktiviert wird.

8. Verfahren nach Anspruch 7, **dadurch gekennzeichnet, dass** die Bremskraft so gewählt wird, dass der Minimalwert der Beschleunigung etwa auf Null reduziert wird.

9. Verfahren nach einem der vorherigen Ansprüche, **dadurch gekennzeichnet, dass** die Zuordnung des Minimalwertes und/oder des Maximalwertes zu der jeweiligen Grenze des Stellbereiches in Abhängigkeit einer momentanen Fahrzeuggeschwindigkeit durchgeführt wird.

10. Vorrichtung (30) zum Steuern der Antriebseinheit eines Fahrzeugs, wobei Mittel (15) zur Ableitung eines Beschleunigungswunsches aus einer Stellung eines Bedienelementes (1), insbesondere eines Fahrpedals, vorgesehen sind und wobei Mittel (15) vorgesehen sind, die in Abhängigkeit des Beschleunigungswunsches einen Sollwert für eine Ausgangsgröße der Antriebseinheit bilden, **dadurch gekennzeichnet, dass** Mittel (20) zur Ermittlung eines Minimalwertes und/oder eines Maximalwertes für die Beschleunigung des Fahrzeugs in Abhängigkeit eines momentanen Fahrwiderstandes vorgesehen sind und dass Mittel (15) zur Zuordnung des Minimalwertes und/oder des Maximalwertes zu jeweils einer Grenze eines Stellbereiches für die Stellung des Bedienelementes (1) vorgesehen sind.

**Claims**

1. Method for controlling the drive unit of a vehicle, an acceleration request being derived from a position of an operator control element (1), in particular an accelerator pedal, and a setpoint value for an output variable of the drive unit being formed as a function of the acceleration request, **characterized in that** a minimum value and/or a maximum value for the acceleration of the vehicle are acquired as a function of an instantaneous driving resistance, and **in that** the minimum value and/or the maximum value are each assigned to a limit of an actuating range for the position of the operator control element (1).

2. Method according to Claim 1, **characterized in that** the driving resistance is acquired as a function of a rolling

**EP 1 537 312 B1**

friction, an air resistance, a driving resistance due to a positive incline and/or a force of inertia.

3. Method according to one of the preceding claims, **characterized in that** an unknown component of the driving resistance is derived using a vehicle movement dynamic equation as a function of an instantaneous driving force of the vehicle, a known component of the driving resistance and an instantaneous acceleration of the vehicle.

4. Method according to Claim 3, **characterized in that** the unknown component of the driving resistance is filtered, in particular by means of a low-pass filter (5).

5. Method according to one of the preceding claims, **characterized in that** the minimum value of the acceleration is acquired from a driving force of the vehicle, determined by means of an instantaneous drag torque, minus the instantaneous driving resistance.

6. Method according to one of the preceding claims, **characterized in that** the maximum value of the acceleration is acquired from a maximum driving force, determined by means of the instantaneous operating point of the vehicle, minus the instantaneous driving resistance.

7. Method according to one of the preceding claims, **characterized in that** a vehicle brake (10) is activated if a minimum value of the acceleration exceeds the value zero when the operator control element (1) is in the position which is assigned to the minimum value.

8. Method according to Claim 7, **characterized in that** the braking force is selected such that the minimum value of the acceleration is reduced approximately to zero.

9. Method according to one of the preceding claims, **characterized in that** the assignment of the minimum value and/or of the maximum value to the respective limit of the actuating range is carried out as a function of an instantaneous vehicle speed.

10. Device (30) for controlling the drive unit of a vehicle, means (15) being provided for deriving an acceleration request from a position of an operator control element (1), in particular an accelerator pedal, and means (15) being provided which form a setpoint value for an output variable of the drive unit as a function of the acceleration request, **characterized in that** means (20) are provided for determining a minimum value and/or a maximum value for the acceleration of the vehicle as a function of an instantaneous driving resistance, and **in that** means (15) are provided for assigning the minimum value and/or the maximum value to in each case one limit of an actuating range for the position of the operator control element (1).

**Revendications**

1. Procédé de commande de l'unité d'entraînement d'un véhicule selon lequel à partir d'une position d'un élément de manoeuvre (1) notamment de la pédale d'accélérateur, on déduit une demande d'accélération et en fonction de la demande d'accélération, on forme une valeur de consigne pour une grandeur de sortie de l'unité d'entraînement, **caractérisé en ce qu'**
en fonction de la résistance instantanée au déplacement, on détermine une valeur minimale et/ou une valeur maximale de l'accélération du véhicule, et
on associe la valeur minimale et/ou la valeur maximale chaque fois à une limite d'une plage de réglage de la position de l'élément de manoeuvre (1).

2. Procédé selon la revendication 1,
**caractérisé en ce qu'**
on détermine la résistance au roulage en fonction du frottement de roulement, de la résistance de l'air, de la résistance de roulement associée à la pente et/ ou à la force d'inertie.

3. Procédé selon l'une quelconque des revendications précédentes,
**caractérisé en ce qu'**
on déduit une composante inconnue de la résistance au roulage à l'aide d'une équation de dynamique de roulage en fonction de la force d'entraînement instantanée du véhicule, d'une composante connue de la résistance au roulage et d'une accélération instantanée du véhicule.

**4.** Procédé selon la revendication 3,
**caractérisé en ce qu'**
on filtre la partie inconnue de la résistance au roulage notamment à l'aide d'un filtre passe-bas.

**5.** Procédé selon l'une quelconque des revendications précédentes,
**caractérisé en ce qu'**
on détermine la valeur minimale de l'accélération à partir d'une force d'entraînement du véhicule déterminée par le couple de traction instantanée, cette force étant diminuée de la résistance instantanée au roulage.

**6.** Procédé selon l'une quelconque des revendications précédentes,
**caractérisé en ce qu'**
on détermine la valeur maximale de l'accélération à partir d'une force d'entraînement maximale définie par le point de fonctionnement instantané du véhicule diminué de la résistance instantanée au roulage.

**7.** Procédé selon l'une quelconque des revendications précédentes,
**caractérisé en ce que**
dans le cas d'une valeur minimale de l'accélération dépassant la valeur nulle, on active le frein (10) du véhicule pour la position de l'élément de manoeuvre (1) associée à cette valeur minimale.

**8.** Procédé selon la revendication 7,
**caractérisé en ce qu'**
on choisit la force de freinage pour que la valeur minimale de l'accélération soit sensiblement réduite à zéro.

**9.** Procédé selon l'une quelconque des revendications précédentes,
**caractérisé en ce que**
l'on associe la valeur minimale et/ou la valeur maximale aux limites respectives de la plage de réglage selon la vitesse instantanée du véhicule.

**10.** Dispositif (30) de commande de l'unité d'entraînement d'un véhicule comportant des moyens (15) pour déduire une demande d'accélération à partir de la position d'un élément de manoeuvre (1) notamment de la pédale d'accélérateur et des moyens (15) sont prévus, qui, en fonction de la demande d'accélération, forment une valeur de consigne d'une grandeur de sortie de l'unité d'entraînement,
**caractérisé par**
des moyens (20) pour déterminer la valeur minimale et/ou la valeur maximale de l'accélération du véhicule en fonction de la résistance instantanée de roulage, et des moyens (15) pour associer la valeur minimale et/ou la valeur maximale chaque fois à la limite d'une plage de réglage de la position de l'élément de manoeuvre (1).

## Fig. 1

## Fig. 2

**Fig. 3**

Mschlepp $\longrightarrow$ $\circledast$ $\longrightarrow$ FANgrenzmin

50

$\dfrac{1}{r}$

**Fig. 4**

Mengmax $\longrightarrow$ $\circledast$ $\longrightarrow$ FANgrenzmax

55

$\dfrac{1}{r}$

**Fig. 5**

$a_{soll}$ [m/s$^2$]

agrenzmax

Pedalweg [%]

0                                    100

agrenzmin

**Fig. 6**

$a_{soll}$ [m/s$^2$]

agrenzmax

agrenzmin

Bremsbereich

Pedalweg [%]

0            P1                        100